# EUROPEAN PATENT SPECIFICATION

(11) **EP 3 121 754 B1**
(45) Date of publication and mention of the grant of the patent: **09.05.2018**
(21) Application number: 16180458.8
(22) Date of filing: 20.07.2016
(51) Int. Cl.: G06F 21/85, B60R 25/00

(54) **SAFETY SYSTEM FOR CONTROLLING THE COMMUNICATION BETWEEN AT LEAST ONE CONTROL UNIT AND AN AUXILIARY DEVICE**
SICHERHEITSSYSTEM ZUR STEUERUNG DER KOMMUNIKATION ZWISCHEN MINDESTENS EINER STEUEREINHEIT UND EINER HILFSVORRICHTUNG
SYSTÈME DE SÉCURITÉ DESTINÉ À COMMANDER LA COMMUNICATION ENTRE AU MOINS UNE UNITÉ DE COMMANDE ET UN DISPOSITIF AUXILIAIRE

(30) Priority: 21.07.2015 IT UB20152317
(43) Date of publication of application: 25.01.2017
(73) Proprietor: Vodafone Automotive S.p.A., 21100 Varese (VA) (IT)
(72) Inventor: DE MARIA, Giordano, 21100 Varese (IT); VEDANI, Carlo, 21100 Varese (IT)
(74) Representative: Boult Wade Tennant

(56) References cited:
- WO-A1-2014/181094
- WO-A1-2015/128854
- DE-U1-202014 104 646
- GB-A- 2 197 734
- US-A1- 2007 011 462
- S.Bayer ET AL: "OBD = Open Barn Door? Security Vulnerabilities and Protections for Vehicular OBD Interfaces", 10. IAV Symposium für Steuerungssysteme, 11 November 2014 (2014-11-11), XP055258960, Berlin, Germany Retrieved from the Internet: URL:https://www.escrypt.com/fileadmin/escr ypt/pdf/Whitepaper/OBD_Open_Barn_Door_Secu rity_Vulnerabilities_and_Protections_for_V ehicular_On_Board_Diagnosis.pdf [retrieved on 2016-03-16]

## Description

### FIELD OF THE INVENTION

The present invention refers to a safety device for controlling the communication between at least one control unit and an auxiliary device.

More particularly, the invention refers to a safety device for controlling the communication between a plurality of control units and a movable/removable electronic device for the on-board diagnostics of a vehicle.

The system, object of the present invention, can be used for checking attempts to fraudulently access to the electronic system of a vehicle, and therefore for only enabling authorized persons to perform diagnostic tests. Specifically, the safety system can be used for example on motor-cars, motor-bikes, lorries, public transport vehicles for enabling to perform the on-board diagnostics of the same and, at the same time, for defining a safety system designed for preventing the control units of the vehicle for being tampered and consequently the theft thereof.

More generally, it is observed that the system object of the present invention can find application also outside the automotive field; particularly, the claimed system shows to be particularly adapted for all those applications wherein it is necessary to have a safety auxiliary mechanism detecting non authorized access attempts in electronic systems implementing reciprocal authentication means in a native architecture devoid of systems for safely exchanging data.

### BACKGROUND OF THE INVENTION

As it is known, nowadays, the vehicles are provided with an on-board electronics comprising one or more electronic control units which are connected to the majority, if not all, of the electric/electronic operative components of the vehicle. The electronic control units had and still have a fundamental function in the transport vehicles and particularly with reference to the technological contents of these latter; there are many studies and developments about the electronic units, which nowadays are configured for managing the safety and efficiency of the transport vehicle: due to the electronic control units, it is indeed possible to track, display and manage possible failures on the vehicle, and also to set or optimize some parameters in relation to the operation of the same.

De facto, the electronic control unit is the only element which manages, controls, drives and adjusts all the main functions of the vehicle, for example the operation of the engine, of the braking system, the traction, and safety system. This is made possible also by the presence of sensors destined to acquire data from the different components of the vehicle, which are all connected to one or more electric control units; the data gathered by the sensors are sent to the control units which deal with the processing and analysis of the gathered data in order to define the operative conditions of the different components.

As hereinbefore briefly mentioned, the control unit, besides performing only electro-mechanical tasks for managing the vehicle (for example for commanding the ignition, adjusting the compression ratio for calibrating the knocking, adjusting the injection/feed), is further configured for performing tasks regarding the safety services and functions among which the following controls are present: the control of preset values in order to avoid malfunctions, the control of the "drive-by-wire" systems, the acknowledgement of defects in sensors and actuators, the control of the anti-braking system (ABS), the control of the traction, the control of the safety systems (the anti-theft system).

Besides the electronic control unit, nowadays are widely known and used in the engine field, particularly in the automotive and motorcycle fields, integrated systems for the on-board diagnostics (defined also as OBD systems) capable of self-analyzing the vehicle and signaling possible errors/failures. Particularly, the OBD system is a self-diagnostic system connected to the vehicle control unit and configured for receiving data from this latter in order to determine failures in the components or malfunctions of the transport vehicle. The OBD system has a connecting physical interface, known as port OBD, generally placed below the control board. By means of suitable apparatuses, it is possible to be connected to the port OBD of a vehicle and consequently querying the OBD system from which it will be possible to send/receive data regarding the operative parameters of the vehicle itself.

De facto, the connection to the port OBD is made by the vehicle owner or by a mechanic in order to have access to the information about the operative condition of the several electronically controlled and monitored sub-systems of the vehicle.

The first implementations of the OBD systems simply provided to signal a malfunction, for example by simply turning on a warning light, but they did not supply any further information in relation to the type of problem. These first implementations provided an interface and an OBD standard-type language. Instead, the up-to-date OBD implementations use a digital communication port for supplying real-time information in addition to a signal about the type of problems, by DTC standard codes (Diagnostic Trouble Codes), which enable to quickly identify and solve the vehicle malfunctions.

These latter systems indeed enable to have a complete vision of the engine parameters and to monitor other parts of the vehicle such as the frame and the accessories; the modern systems have a standard and a determined interface OBD-II (American standard) or E-OBD (European standard).

The plural functionalities of the electronic control unit and of the OBD diagnostic system connected to it, enable to quickly and accurately identify, by simply connecting them to a suitable movable or removable device via the port OBD (OBD, OBD-II or E-OBD interface), the vehicle anomalies; in this way it is possible to directly intervene on the damages part/component of the transport vehicle without being constrained to perform further "manual-type" extensive controls.

Despite the fact that the OBD system enables to perform a quick and efficient diagnostics of the transport vehicle, it has been demonstrated that it is possible to perform attacks to the vehicle safety by just accessing to the port OBD thereof; such port, designed for the vehicle diagnosis, is indeed potentially useable for simulating an authorized access. As a consequence of that, it is for example possible to deactivate the alarm system and intervene on the other vehicle parameters, by modifying them, in order to steal the same.

De facto, as hereinbefore described, the OBD system is nowadays connected to the vehicle control unit; the possibility of entering the OBD system enables therefore to have the possibility to access to the electronic control unit for consequently reprogramming the safety modules thereof for authorizing further accesses: for example, it is possible to completely reprogram the vehicle safety modules so that the safety IDs can be transferred to a blank key. Once reprogrammed the control unit and blank key, this latter will be acknowledged by the vehicle as the only one authorized key and therefore the only one having access to the transport vehicle functionalities such as, for example, the vehicle opening/closing and ignition.

The tool nowadays used for breaking in a vehicle, was originally designed for the mechanical shops - for the vehicle diagnostics - and for the car manufacturing company employees assigned to recover vehicles for being capable of entering the same if the owners have lost the keys. Unfortunately, this tool is nowadays also available to software experts, more precisely to the ones known as crackers, which analyze the weak points of the safety of the OBD network and create an apposite low-cost tool for quickly reprogramming the keys.

To date, the problem is felt because by exploiting the available instrumentation it is possible to access to the vehicle electronic system and also to fraudulently possess the same.

In order to overcome the above-described safety problem, the Applicant has provided a vehicle-installed protection system configured for monitoring and stopping the communication at the port OBD, and therefore preventing to break in and steal the vehicle. Specifically, the system of the Applicant comprises an alarm control unit consisting for example in a power supply, a control unit, volumetric sensors, peripheral inlets, a CAN interface - and a normally-open relay connected across the port OBD and the vehicle on-board control units: the relay interrupts the connection between one or more communication channels of the port OBD (for example the CAN or K-LINE port) and the vehicle on-board control unit. The relay is connected to and completely managed by the protection system; for restoring the connection it is necessary to send a command signal to the protection system, which according to data contained in the command signal, will activate or not the relay. For example, for restoring the connection (closing the relay), it can be provided a remote control unit adapted to communicate to the protection system; the remote control unit can be configured for enabling to compose and send a safety code to the protection system: the protection system will process the delivered data by the remote control unit and checks the validation of the code. Once determined the authenticity of the code, the protection system will command the relay to close, for enabling in this way the communication between the OBD interface and the vehicle control units. Alternatively, the system can be commanded as hereinbefore described by a driver card of the vehicle owner, which enables the protection system to close the relay.

Therefore, the solution of the Applicant is capable of enabling to close the circuit of the OBD system only upon the consent of the vehicle owner which is the only one who knows the safety code, or the only one who owns the driver card. The information sent at the port OBD by a malicious person therefore could be stopped (circuit with the open relay).

Although the just described system increases the system safety, the same does not enable to effectively block all the break-in attempts made by malicious persons; the same Applicant has noticed that such solution is not without disadvantages and therefore can be improved under some aspects.

Firstly, it is possible to try to fraudulently intervene on the OBD line for closing the circuit, in other words by physically bypassing the switch, and restoring the direct communication to the control units. It is also possible to try to directly connect downstream the switch (and not to the port OBD) in order to have a direct access to the control units. Moreover, it is also conceivable a situation wherein someone tries to perform "brute force" attacks or similar for determining a valid activation code without knowing it.

Besides that, it is also noted that usually there is the necessity of querying the OBD control unit of a vehicle when this latter is in motion; the above-described switch system is particularly awkward for these applications because, besides requiring to insert an OBD tester, the owner must insert every time the safety code. In addition, the above-described system can be implemented in an independent alarm control unit or as a sub-system of an alarm control unit; therefore, the system depends on the state of the alarm control unit. However, there is often the necessity of enabling/disabling an OBD control unit (to open or close the relay by the protection system) independently from the state of the alarm system.

### OBJECTS OF THE INVENTION

Therefore, the object of the present invention consists of substantially solving at least one of the disadvantages and/or limitations of the preceding solutions.

It is a first object of the invention to provide an additional safety system for controlling the communication between two sub-systems, a main electronic device and an auxiliary electronic device, which enables only authorized accesses to the main device.

It is a further object of the invention to provide a safety device provided with two levels for verifying the integrity of the system in order to be capable of effectively preventing attempts of breaking in the code authentication main system.

Then, it is an auxiliary object to provide a safety system for controlling the communication capable of protecting the communication among electronic elements which were not built for safely exchanging information, but which anyway require an authentication mechanism.

It is an auxiliary object to provide a safety system which can stop attempts of accessing to the electric control unit of a vehicle, and therefore to prevent a non-authorized reprogramming. Further, it is an ancillary object of the present invention to provide a removable auxiliary device and an associated main protection device which can be enabled and disabled independently from the state of a possible alarm control unit present on the vehicle. A further object of the invention consists of providing a safety system which is operatively adaptable and can be easily implemented on any vehicle provided with electronic control unit capable of for example communicating with standard OBD interfaces present on the same. Moreover, it is an object of the invention to provide a safety system having a moderate cost which however can continuously and constantly ensure the operation of the diagnostic system and control unit of a vehicle, and possibly can be integrated in an alarm system.

One or more of the cited objects are substantially met by a system for controlling the communication, a main device and auxiliary device according to one or more of the following aspects.

### SUMMARY

In a 1st aspect, it is provided a safety system (100) for controlling the communication between at least one control unit and an auxiliary device (1), the safety system comprising at least one communication line (15) for the data passage; at least one control unit (C) and an enabling condition for enabling the communication between the auxiliary device (1) and said at least one control unit (C), said communication interrupting device (12) being active on the communication line (15) and defining a portion (15a) of the communication line (15) upstream the device (12) and a portion (15b) of the communication line (15) downstream the device (12), the interruption condition interrupting a communication between the upstream portion (15a) and downstream portion (15b) of the communication line (15), the downstream portion (15b) of the communication line being connected to said at least one control unit (C), the upstream portion (15a) being adapted to receive data from the auxiliary device; at least one main driving unit (11) configured for reading data on the communicating line (15), said main driving unit (11) being further programmed for configuring the communicating interrupting device (12) in the interruption condition and/or the enabling condition; the main driving unit (11) is configured for detecting at least data passing in the downstream portion (15b) of the communication line (15) and configured for determining a non authorized access as a function of the condition of the interrupting device and the presence or not of data passing in the downstream portion (15b) of the communication line (15).

In a 2nd aspect according to the preceding aspect, the main driving unit (11) is configured for determining a non authorized access in the occurrence of the following operative conditions: the communication interrupting device is in the interruption condition and detection of a data passage in the downstream portion (15b) of the communication line (15).

In a 3rd aspect according to anyone of the preceding aspects, the main driving unit (11) is further configured for detecting data passing in the upstream portion (15a) of the communication line (15).

In a 4th aspect according to the aspect (3), the main driving unit (11) is configured for determining a non authorized access as a function of the condition of the interrupting device and of the presence or not of data passing in the downstream portion (15b) and in the upstream portion (15a) of the communication line (15).

In a 5th aspect according to anyone of the preceding aspects 3 and 4, the main driving unit (11) is configured for detecting a disconnection condition between the driving unit (11) itself and the upstream portion (15a) of the communication line (15), the main driving unit (11) being configured for generating a disconnection signal of the driving unit (11) in the occurrence of the disconnection condition.

In a 6th aspect according to anyone of the preceding aspects from 3 to 5, the main driving unit (11) is configured for determining a non authorized access condition without tamper in the occurrence of the following operative condition: the communication interrupting device is in the interruption condition, detection of a data passage in the upstream portion (15a) of the communication line (15) and detection of the absence of a data passage in the downstream portion (15b) of the communication line (15).

In a 7th aspect according to anyone of the preceding aspects from 3 to 6, the main driving unit (11) is configured for determining a non authorized access condition by bypassing the interrupting device (12) in the occurrence of the following operative condition: the communication interrupting device is in the interruption condition, detection of a data passage in the upstream portion (15a) of the communication line (15), and detection of a data passage in the downstream portion (15b) of the communication line (15).

In an 8th aspect according to anyone of the preceding aspects from 3 to 7, wherein the main driving unit (11) is configured for determining a non authorized access condition downstream the interrupting device (12) in the occurrence of the following operative condition: the communication interrupting device in the interruption condition, absence of a data passage in the upstream portion (15a) of the communication line (15) and detection of a data passage in the downstream portion (15b) of the communication line (15).

In a 9th aspect according to anyone of the preceding aspects from 3 to 8, the main driving unit (11) is configured for detecting a disconnection condition between the driving unit (11) itself and the upstream portion (15a) of the communication line (15), the main driving unit (11) being configured for generating a signal disconnecting the driving unit (11) in the occurrence of the disconnection condition.

In a 10th aspect according to anyone of the preceding aspects, the main driving unit (11) is configured for detecting a disconnection condition between the driving unit (11) itself and the downstream portion (15b) of the communication line (15), the main driving unit (11) being configured for generating a disconnection signal of the driving unit (11) at the occurrence of the disconnection condition.

In an 11th aspect according to anyone of the preceding aspects, the system comprises a first connection interface (8) for communicating the upstream portion (15a) of the communication line (15) with the main driving unit (11) and/or a second connection interface (9) for communicating the downstream portion (15b) of the communication line (15) with the main driving unit (11) .

In a 12th aspect according to anyone of the preceding aspects, the system comprises an auxiliary interface (16) connected to the main driving unit (11) and configured for enabling the communication of the main driving unit (11) with an alarm system.

In a 13th aspect according to anyone of the preceding aspects, the system comprises connection means (7) associated to the communication line (15) for enabling a data communication at least with the auxiliary device (1), particularly said connection means (7) comprising a physical interface, such as a port OBD.

In a 14th aspect according to anyone of the preceding aspects, the system comprises at least one power supply (17) connected to the main driving unit (11) and/or to the communication interrupting device (12) for supplying an electric supply.

In a 15th aspect according to anyone of the preceding aspects, the system comprises at least one memory (18) connected to the main driving unit (11) for storing data.

In a 16th aspect according to anyone of the preceding aspects, the main device (14) comprises the communication line (15), the control unit (C), the communication interrupting device (12) and the main driving unit (11), said control unit (C) being configured for communicating through the communication line according to a prefixed communication protocol, for receiving one or more query data packets according to the communication protocol and for replying, if queried, with a reply data packet according to the communication protocol, the safety system further comprising an auxiliary device (1) having at least one control unit (3) configured for generating a query data packet according to the prefixed communication protocol, said data packet being adapted to be sent to the communication line (15) of the main device (14) for querying at least the control unit present in the main device; connection means (2) for enabling a data communication at least with the main device (14), the driving unit (3) of the auxiliary device being configured for generating according to the prefixed communication protocol and at least once, a data packet replying to said query data packet, said reply data packet generated by the driving unit (3) simulating a reply of a control unit to said query data packet and containing an enabling code, the main driving unit (11) being configured for reading at least the reply data packets passing on the communication line (15) and configured for switching the communication interrupting device (12) to the enabling condition as a function of the enabling code.

In a 17th aspect according to the preceding aspect, the prefixed communication protocol is a protocol OBD and wherein the query data packets comprise standard queries PID.

In an 18th aspect according to anyone of the preceding aspects 16 and 17, the driving unit (3) of the auxiliary device (1) is configured for generating, a plurality of temporarily spaced times for predetermined time intervals and according to the prefixed communication protocol, a query data packet and a corresponding reply data packet replying to said query data packet, each reply data packet generated by the driving unit (3) simulating a reply of a control unit to the corresponding query data packet and each containing a further enabling code, the main driving unit (11) being configured for switching the communication interrupting device (12) to the interruption condition in the absence of a detection of the further enabling codes transmitted at the predetermined time intervals.

In a 19th aspect according to anyone of the preceding aspects from 16 to 18, wherein the auxiliary device (1) is a movable device for the vehicle-on-board diagnostics, the communication protocol being a protocol for the vehicle-on-board diagnostics.

In a 20th aspect according to anyone of the preceding aspects, said control unit (C) comprises a control unit of a movable vehicle (V).

In a 21st aspect, particularly according to anyone of the preceding aspects, it is provided a safety system (100) for controlling the communication between a main device (14) and an auxiliary device (1), said main device (14) comprising: at least one communication line (15) for the data passage; at least one control unit (C) communicating data to the communication line (15) and configured for communicating through the communication line according to a prefixed communication protocol, said control unit (C) being configured for receiving one or more query data packets according to the communication protocol and for replying, if queried, with the reply data packet according to the communication protocol; a communication interrupting device (12) configurable between an interruption condition for interrupting the communication between the auxiliary device (4) and said at least one control unit (C) and an enabling condition for enabling the communication between the auxiliary device (4) and said at least one control unit (C); at least one main driving unit (11) configured for reading the data on the communication line (15), said main driving unit (11) being further programmed for configuring the communication interrupting device (12) in the interruption condition and/or in the enabling condition; connection means for enabling a data communication at least with the auxiliary device (1); said auxiliary device (1) comprising: at least one driving unit (3) configured for generating a query data packet according to the prefixed communication protocol, said data packet being destined to be sent to the communication line (15) of the main device (14) for querying at least the control unit present in the main device; connection means for enabling a data communication with the main device (14); the control unit (3) of the auxiliary device is further configured for generating, according to the prefixed communication protocol and at least once, a data packet replying to said query data packet, said reply data packet generated by the control unit (3) simulating a reply of the control unit to said query data packet and containing an enabling code, the main driving unit (11) being configured for reading at least the reply data packets passing on the communication line (15) and configured for switching the communication interrupting device (12) to the enabling condition as a function of the enabling code.

In a 22nd aspect, particularly according to anyone of the preceding aspects, it is provided a main device (14) for a system (100) for controlling the communication between the main device (14) and an auxiliary device (1), comprising: at least one communication line (15) for the data passage; at least one control unit (C) communicating data to the communication line (15) and configured for communicating through the communication line according to a prefixed communication protocol, said control unit (C) being configured for receiving one or more query data packets according to the communication protocol and for replying, if queried, with a reply data packet according to the communication protocol; a communication interrupting device (12) configurable between an interruption condition for interrupting a communication between the auxiliary device (1) and said at least one control unit (C) and an enabling condition for enabling the communication between the auxiliary device (1) and said at least one control unit (C); at least one main driving unit (11) configured for reading data on the communication line (15), said main driving unit (11) being further programmed for configuring the communication interrupting device (12) in the interruption condition and/or in the enabling condition; connection means for enabling a data communication at least with the auxiliary device (1); the main driving unit (11) is configured for reading at least the reply data packets passing on the communication line (15) and for selectively switching the communication interruption device (12) to the enabling condition as a function of reading an enabling code in at least one reply data packet.

In a 23rd aspect, particularly according to anyone of the preceding aspects, it is provided an auxiliary device (1) for a system (100) for controlling the communication between the main device (14) and an auxiliary device (1), comprising: at least one control unit (3) configured for generating a query data packet according to a prefixed communication protocol, said data packet being destined to be sent to a communication line (15) of a main device (14) according to the preceding claim for querying at least one control unit present in the main device; connection means for enabling a data communication at least with the main device (14); the control unit (3) is configured for further generating, according to the prefixed communication protocol and at least once, a data packet replying to said query data packet, said reply data packet generated by the control unit (3) simulating a reply of a control unit to said query data packet, and containing an enabling code.

In a 24th aspect, particularly according to anyone of the preceding aspects, it is provided a removable auxiliary device (1) for the on-board diagnostics of vehicles (V), particularly motor-vehicles and/or motor-bikes, said removable device (1) comprising: at least one physical interface (2) configured for being connected to a port OBD, for example a port OBD-II and/or EOBD, of a vehicle (V), at least one driving unit (3) connected to and in communication with the physical interface (2), the removable auxiliary device (1) being configured for being connected, by the physical interface (2), to a main device (14) installable on a vehicle (V) between the port ODB and at least one control unit (C) of said vehicle (V), the main device (14) being of a type comprising at least one main driving unit (11) connected to the port OBD of the vehicle (V), and at least one communication interrupting device (12) which is interposed between the main driving unit (11) of the main device (14) and the control unit (C) of the vehicle (V), a communication interrupting device (12) being configured for defining an open (or interruption) condition wherein prevents the communication between the main driving unit (11) and the control unit of the vehicle (V), the communication interrupting device (12) is further configured for defining a closed (or enabling) condition wherein enables the communication between the main driving unit (11) and the control unit of the vehicle (V), the communication interrupting device (12) is configured for normally defining the open condition by preventing the communication between the port OBD and the control unit (C) of the vehicle (V), the main driving unit (11) being active on the communication interrupting device (12) for commanding the closed and open conditions of this latter, and wherein the driving unit (3) of the removable auxiliary device (1), following the connection of this latter to the main device (14) by means of the port OBD of the vehicle (V), is configured for generating a data packet according to a communication protocol for the on-board diagnostics of a vehicle (V), said data packet comprising a query data packet according to the standard OBD, and a reply data packet according to the standard OBD, the reply data packet comprising at least one enabling code, for sending said data packet containing the enabling code to the main device (14) by said port OBD of the vehicle (V),
the main driving unit (11) of the main device (14) being configured for reading said enabling code and if the enabling code is valid, commanding the closed condition of the communication interrupting device (12).

In a 25th aspect, particularly according to anyone of the preceding aspects, it is provided a main device (14) for the on-board diagnostics of the vehicles (V), particularly motor-vehicles and/or motor-bikes, said main device (14) comprising: at least one main driving unit (11) configured for being connected to a port OBD of a vehicle (V), at least one communication interrupting device (12), particularly a relay, configured for being interposed between the main driving unit (11) of the main device (14) and a control unit (C) of the vehicle (V), the communication interrupting device (12) being configured for defining an open (or interruption) condition wherein prevents the communication between the main driving unit (11) and the control unit of the vehicle (V), the communication interrupting device (12) being further configured for defining a closed (or enabling) condition wherein enables the communication between the main driving unit (11) and the control vehicle of the vehicle (V), the communication interrupting device (12) being configured for normally defining the open condition by preventing the communication between the port OBD and the control unit (C) of the vehicle (V), the main driving unit (11) being active on the communication interrupting device (12) for commanding the closed and open conditions of this latter, the main driving unit (11) being further configured for: receiving, via the port OBD of the vehicle (V), a data packet according to a communication protocol for the on-board diagnostics of a vehicle (V) which comprises a query data packet and a reply data packet according to the standard OBD, said reply data packet comprising at least one enabling code, processing the enabling code of the data packet for determining the validity, if the enabling code is valid, commanding the closed condition of the communication interrupting device (12).

In a 26th aspect according to anyone of the preceding aspects, the main driving unit (11) is configured for commanding the enabling condition of the communication interrupting device (12) only in the condition wherein the main driving unit (11) itself has verified a validity of an enabling code received from the auxiliary device (1).

In a 27th aspect according to anyone of the preceding aspects, the connecting means (7) of the main device (14) comprise at least one physical interface for the connection to the auxiliary device (1).

In a 28th aspect according to anyone of the preceding aspects, the connection means (2) of the auxiliary device (1) comprise at least one physical interface for the connection to the auxiliary device (1).

In a 29th aspect according to anyone of the preceding two aspects, the physical interface is a standard port OBD, particularly the physical interface comprising at least one port OBD, OBD-II or EOBD.

In a 30th aspect according to anyone of the preceding aspects, said control unit (C) comprises a control unit of a vehicle (V), and wherein the physical interface is a standard port OBD.

In a 31st aspect according to anyone of the preceding aspects, the prefixed communication protocol is a protocol OBD, and wherein the query data packets comprise standard queries PID.

In a 32nd aspect according to anyone of the preceding aspects, the query data packet to which the driving unit (3) generates also the reply data packet, is a standard query Mode 1, PID 0 according to the protocol OBD, the reply data packet generated by the driving unit consisting in 4 data bytes according to the reply to the standard query Mode 1, PID 0.

In a 33rd aspect according to anyone of the preceding aspects, the driving unit (3) of the auxiliary device, before generating the reply data packet simulating the reply of a control unit, is further configured for generating a query data packet and waiting a prefixed time interval for verifying an absence of a reply from said control unit.

In a 34th aspect according to anyone of the preceding aspects, the driving unit (3) of the auxiliary device is configured for generating, a plurality of temporarily spaced times for predetermined time intervals and according to the prefixed communication protocol, a query data packet and a corresponding data packet replying to said query data packet, each reply data packet generated by the driving unit (3) simulating a reply of a control unit, to the corresponding query data packet and containing, each, a further enabling code, the main driving unit (11) being configured for switching the communication interrupting device (12) to the interruption condition in the absence of a detection of the further enabling codes transmitted at predetermined time intervals.

In a 35th aspect according to anyone of the preceding aspects, said reply data packet generated by the driving unit (3) simulates a reply of a virtual control unit which is not effectively in data communication with the communication line (15) of the main device (14).

In a 36th aspect according to anyone of the preceding aspects, the main device (14) comprises n control units (C) in data communication with the communication line (15), said reply data packet generated by the driving unit (3) simulating the reply of a virtual control unit n+1.

In a 37th aspect according to anyone of the preceding aspects, the auxiliary device (1) is a movable device for the vehicle-on-board diagnostics, the communication protocol being a protocol for the vehicle-on-board diagnostics.

In a 38th aspect according to anyone of the preceding aspects, the auxiliary device (1) further comprises a data transmission and/or reception device (6) for enabling the connection to a further external electronic unit, said data transmission and/or reception device (6) being slaved to the driving unit (3).

In a 39th aspect according to anyone of the preceding aspects, the driving unit (3) of the auxiliary device (1) is configured for sensing the voltage in the main device (14) and for generating the reply data packet simulating the reply of a control unit only after sensing the voltage in the main device (14).

In a 40th aspect according to anyone of the preceding aspects, said main device (14), upon receiving the enabling code, being configured for commanding the closed condition of the communication interrupting device (12), only in a condition wherein the enabling code received from the driving unit (3) is valid, particularly the main device (14), if the enabling code is not valid, is configured for not sending any command to the communication interrupting device (12) which remains in the open condition.

In a 41st aspect according to anyone of the preceding aspects, the driving unit (3) of the auxiliary device (1) is configured for simulating a virtual control unit, the driving unit (3) is further configured for generating a first query data packet according to a communication protocol for the on-board diagnostics of a vehicle (V) which comprises at least one diagnostic command, for simultaneously generating a second data packet replying to the query packet according to the protocol for the on-board diagnostics of a vehicle (V) which comprises said enabling code, for sending, via the port OBD of the vehicle (V), the second data packet containing the enabling code towards the main device (14) .

In a 42nd aspect according to anyone of the preceding aspects, the vehicle (V) is of a type comprising an electric system which is energized upon inserting and activating a key in a vehicle (V) control board, the driving unit (3) being configured for sending the first query data packet and reply data packet upon energizing the vehicle (V) electric system.

In a 43rd aspect according to anyone of the preceding aspects, the driving unit (3) is configured for generating the reply data packet comprising an enabling code varying with a generation algorithm according to an algorithm generating the verifying code of the main device (14).

In a 44th aspect according to anyone of the preceding aspects, the driving unit (3) is configured for generating a data packet according to at least one selected in the group among the following communication protocols for the vehicle-on-board diagnostics: VPW, PWM, ISO 9141, ISO 14230 KWP2000, ISO 15765.

In a 45th aspect according to anyone of the preceding aspects, the physical interface (2) comprises an interface CAN and/or K-LINE and/or L-LINE.

In a 46th aspect according to anyone of the preceding aspects, the auxiliary device (1) comprises at least one power supply (4) connected to the driving unit (3) and/or physical interface (2), the power supply (4) being configured for supplying electric energy to the removable device (1) at least in the condition wherein the supply from the main device (14) is absent.

In a 47th aspect according to the preceding aspect, the power supply (4) is configured for receiving and storing the electric energy of the vehicle (V) electric system if the removable device (1) is connected via the interface (2), to the port OBD of the vehicle (V) itself.

In a 48th aspect according to anyone of the preceding aspects, the auxiliary device (1) further comprises at least one memory (5) connected to the driving unit (3) and configured for storing possible data entering this latter from the vehicle (V) control unit.

In a 49th aspect according to anyone of the preceding aspects, the auxiliary device (1) comprises a further physical interface (6) connected to the driving unit (3) and configured for enabling to connect further driving units to the removable device (1) for reading data from the driving unit (3), particularly the further physical interface (6) comprises at least one port OBD, OBD-II or EOBD.

In a 50th aspect, it is provided a process for the on-board diagnostics of a vehicle (V), particularly a motor-vehicle and/or motor-bike, said process comprising at least the following steps: providing at least one removable device (1) according to anyone of the preceding aspects, providing at least one main device (14) according to anyone of the preceding aspects, said main device being connected to and interposed between the port OBD and the electronic control unit of the vehicle (V), connecting the removable device (1) to the vehicle (V) port OBD via the physical interface (2), for generating, by the driving unit (3), a data packet according to a communication protocol for the on-board diagnostics of a vehicle (V), which comprises at least one query data packet and a reply data packet according to the transmission protocol, the reply data packet containing the enabling code, for sending said data packet containing the enabling code to the main device (14) via the interface (2) and port OBD of the vehicle (V), upon sending, by the driving unit (3), the data packet containing the enabling code, the main device (14) executing at least the following steps: receiving, via the vehicle (V) port OBD, the data packet containing the enabling code, processing said enabling code, verifying the validity of the enabling code, if the enabling code is valid, the main device (14) commands to close the communication interrupting device (12).

### BRIEF DESCRIPTION OF THE DRAWINGS

The description will be given in the following with reference to the attached drawings representing the system for controlling the communication, given only as an exemplifying, and therefore non limiting way, wherein:
- Figures 1 and 2 are respective diagrams of a vehicle diagnostic system according to the present invention;
- Figure 3 is an operative diagram of a vehicle diagnostic system according to the present invention;
- Figure 4 is a flowchart referring to a process for the vehicle-on-board diagnostics.

### DETAILED DESCRIPTION

The safety system for controlling the communication between at least one control unit C and an auxiliary device 1 is generally indicated by the reference 100.

The safety system 100 and the associated sub-systems 1 and 14 are considered as not limited to the automotive field, because the system is equally applicable to any type of communications between two electronic sub-systems which must authenticate each other before communicating, however in the following, the present detailed description will mainly refer to the automotive field and to a communication system according to the standard OBD.

### Removable device for the on-board diagnostics of a vehicle

1 generally indicates a removable auxiliary device for the on-board diagnostics of a vehicle V according to the invention. Specifically, the removable device 1 is connectable to vehicles V provided with one or more electronic control units C and at least one port OBD for the on-board diagnostics of the vehicle itself. The removable device 1 is usually a tester OBD for sending standardized requests according to the protocol OBD to the vehicle control units, and for receiving data from these latter as a reply to the queries. The device 1 is physically distinct from and connectable to the port OBD of a vehicle V for being then used by authorized persons, for performing diagnostic tests on the vehicle as it will be better described in the following. For example, the device 1 can be used on motor-cars, motor-bikes, lorries, public transport vehicles for enabling the on-board diagnostics of the same and, at the same time, for defining, with the main device 14 present on the vehicle, a safety system adapted to prevent the vehicle V control units from being tampered and therefore to steal the vehicle itself.

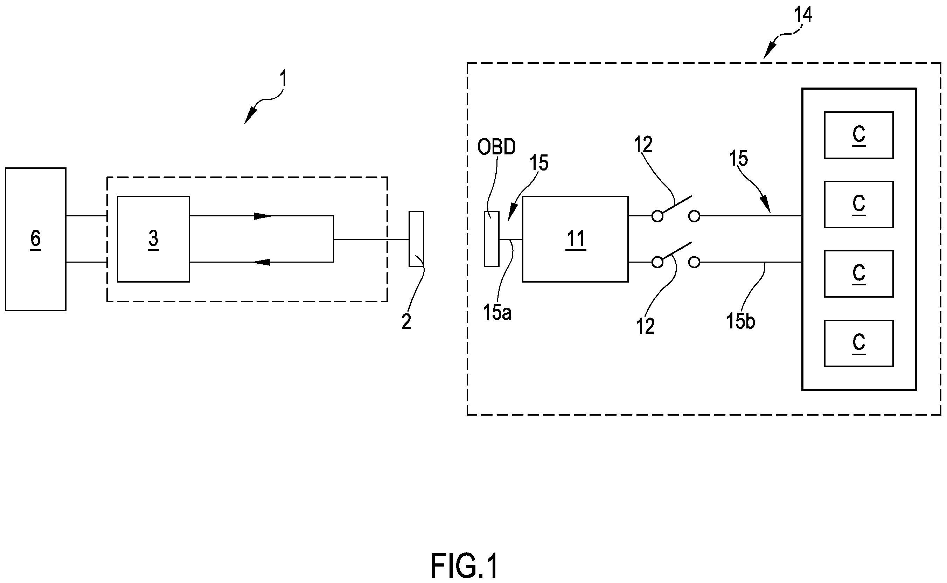

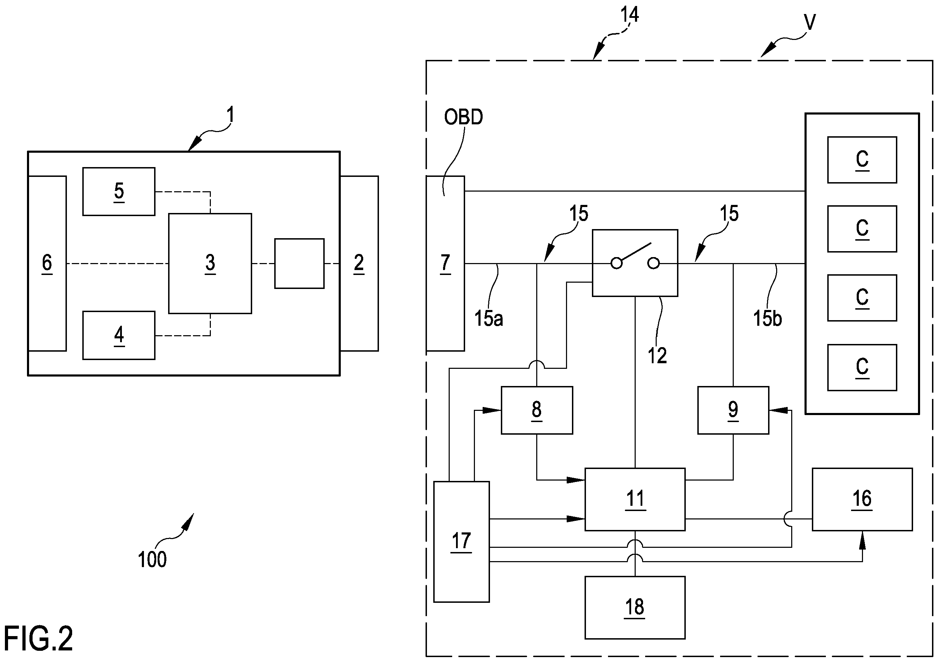

As it is visible for example in Figures 1 and 2, the removable device 1 comprises at least one physical interface 2 configured for being connected to a port OBD, for example a port OBD-II and/or EOBD, of a vehicle V; de facto, the physical interface 2 can comprise, in an illustrative and therefore non limiting way, an interface CAN and/or K-LINE and/or L-LINE configured for being connected to a port OBD of a vehicle V.

Moreover, the removable device 1 comprises at least one driving unit 3, for example a microcontroller, connected to the physical interface 2, for example by means of a circuit printed on an electronic board: the driving unit 3 represents substantially "the brain" of the removable device 1 capable of managing all the elements of the device itself, and particularly all the elements integrated on the electronic board on which the driving unit 3 is integrated.

The driving unit 3 is configured for generating and managing data packets according to a communication protocol for the vehicle V on-board diagnostics. Particularly, the driving unit 3 is configured for generating, reading and writing data inside the data packet. Particularly, the driving unit 3 is configured for generating a data packet according to at least one selected in the group among the following communication protocols for the vehicle V on-board diagnostics: V, VPW, PWM, ISO 9141, ISO 14230 KWP2000, ISO 15765.

The above described driving unit 3 is connected to the physical interface 2, specifically via suitable interface transceivers; the driving unit 3 is configured for managing the data packet passage via said physical interface 2: de facto, the driving unit is configured for sending and receiving data packets directly via the physical interface 2.

For better comprehending the structure and operation of the removable device 1, it is useful to specify that this latter is destined to be connected, via the physical interface 2, to a main device 14 (Figures 1 and 2) present on a vehicle V. The main device 14 comprises a communication line 15 for the data passage, such as the CAM bus line of the vehicle.

Moreover, the same comprises connecting means for enabling a data communication at least with the auxiliary device 1. Particularly, and as shown in the attached figures, the connection means 7 comprise a physical interface, such as a port OBD.

Obviously, in a different implementation, also not falling in the automotive field, the connection means could comprise wired or wireless, standard or dedicated communication interfaces.

The main device 14 then comprises at least one, and preferably a plurality of control units C having a (wired or wireless) data communication with the communication line 15 and configured for communicating via the communication line according to a prefixed communication protocol (protocol OBD).

The main device 14 also includes a communication interrupting device 12 configurable between an interruption condition for interrupting the communication between the auxiliary device 1 and said at least one control unit C, and an enabling condition for enabling the communication between the auxiliary device 1 and control unit C.

Lastly, the main device includes a main driving unit 11 configured for reading data on the communication line 15. The main driving unit 11 is further programmed for configuring the communication interrupting device 12 in the interruption and/or enabling conditions.

As it will be better described in the following, the main driving unit 11 is configured for being installed immediately downstream the port OBD of the vehicle V for intercepting/reading signals directed to, and from the vehicle V control units: the main driving unit 11 is configured for intercepting all the signals directed to the vehicle control units and for selectively preventing (by commanding the interrupting device 12) the direct connection between the vehicle V port OBD and control units C. Specifically, the main driving unit 11 has a data connection with the vehicle V port OBD, and drives at least the communication interrupting device 12 between the port OBD and the vehicle V control unit C; the communication interrupting device 12 is configured for defining an open condition, wherein it prevents the communication between the main driving unit 11 and the control unit of the vehicle C, and a closed condition wherein the same enables the communication (is in communication with) the port OBD and control unit of the vehicle V. Commanding the states of the interrupting device is completely (only) managed by the main driving unit 11 of the main device 14.

Turning back to the description of the removable device 1, the driving unit 3 is configured for detecting a connection of the removable device 1 to the main device 14. Particularly, the driving unit 3 is configured for detecting the conditions under which the physical interface 2 is connected (inserted) to the port OBD of the vehicle V, and therefore is set in direct electric communication with the vehicle. In a preferred but non limiting embodiment of the invention, the driving unit 3, once connected to the port OBD of the vehicle V (via the interface 2) is configured for detecting if the electric system of this latter has been energized.

The driving unit 3, upon the electric connection to the main device 14, via the port OBD of the vehicle V, is configured for generating a data packet according to a communication protocol for the on-board diagnostics of a vehicle V, the packet thereof comprises at least one enabling code (the enabling code of the main device). Upon generating said data packet, the driving unit 3 is configured for sending the same packet - containing the enabling code - to the main device 14 via the port OBD of the vehicle V. Specifically, the data packet is transmitted via the physical interface 2 and, by passing via the port OBD of the vehicle V, it arrives in the main device 14. As it will be better described in the following, the main device 14, upon receiving the enabling code (the code contained in the data packet), is configured for processing said enabling code and if the same is valid, to command the enabling (or closed) condition of the communication interrupting device 12.

In a preferred embodiment, the driving unit 3 is configured for simulating a virtual control unit inside the driving unit 3 itself; the address of the virtual control unit will be the same as the one of the first available control unit (if on the vehicle there are three control units, the virtual control unit will reply with an address assignable to a fourth control unit, for example). De facto, the driving unit 3 is configured for simulating inside the removable device 1 a vehicle V control unit. In such arrangement, the driving unit 3 generates a first data packet, according to a communication protocol for the on-board diagnostics of a vehicle V, which comprises at least one diagnostic commanding (for example: by using a protocol according to the standard OBD-II, the diagnostic command could comprise a MODO 01 - PID 00 type signal). Upon generating the first query and simulation data packet of the virtual control unit, the driving unit 3 simultaneously generates a second reply data packet according to the communication protocol for the on-board diagnostics of the vehicle V, which comprises the enabling code. The diagnostic command (or query data packet) is destined to all the control units of the system. The generated data train is sent via the port OBD to the main device 14 and flows along the communication line 15.

Here, under a communication interruption condition, it cannot flow and arrive to the control units to which it is addressed.

The main driving unit 11 is on the watch on the communication line upstream the communication interrupting device 12 and can therefore read the arriving data packets (the ones which cannot flow).

De facto, as hereinbefore described, the data packet arrives at the physical interface 2 and, via the vehicle port OBD, is read by the main driving unit 11. In this lastly described arrangement, the enabling code which is contained in the simulated reply data packet of the virtual control unit is also read by the main driving unit 11 which can process it.

The driving unit 3 is configured for generating a data packet, the enabling code thereof is variable with a predetermined algorithm only known to the main driving unit 11. De facto, the enabling code varies at each delivery of the data packet to the main device 14. The driving unit 13 simulates the virtual control unit and outputs, simultaneously with the query data packet, the second data packet replying to the preceding query; the reply data packet comprises the enabling code variable according to the generation algorithm.

In an embodiment illustrated in Figure 2, the removable device 1 can comprise, in a non limiting way, at least one power supply 4, for example a removable backup battery, connected to the driving unit 3 and/or physical interface 2, via a printed circuit, for example.

Generally, the main supply is provided by the port OBD and a supplying circuit provides a voltage at the different circuit sections. The backup battery 4 is capable of supplying the system also when the port OBD interrupts the supply (following an accident, for example). De facto, if there is the necessity of activating the removable device 1 when this latter is not supplied (or disconnected from) by the port OBD of the vehicle V, the power supply 4 can supply electric energy for activating it and possibly for querying, or for saving data. In a preferred but non limiting embodiment of the invention, the power supply 4 is rechargeable and particularly configured for receiving and storing electric energy from the electric system of the vehicle V when the removable device 1 is connected, via the interface 2, to the port OBD of the vehicle V itself.

The removable device 1 can comprise at least one memory 5 connected to the driving unit 3 and configured for storing possible data arriving to this latter from the control unit of the vehicle V. De facto, it could be advantageous to connect the removable device 1 to the port OBD of the vehicle V when this latter is in motion for analyzing the operation of the moving vehicle. Indeed, it could be particularly advantageous to store in the memory 5, data of the moving vehicle V supplied by the control units C. Then, the data could be easily unloaded to and analyzed by the removable device when the vehicle is still.

By still looking at Figure 2, it is possible to note that the removable device 1 can in addition comprise a further interface 6 (for example a physical or also a wireless one) connected to the driving unit 3 and configured for enabling the connection of further driving units to the removable device 1 for reading data entering the driving unit 3.

The interface 6 enables to connect the system 1 to other systems forming the diagnostic system, via both a wired and wireless interfaces. In this specific case, it is possible to provide a standard Bluetooth and/or a low energy connections enabling the communication with a smartphone. These latter devices are then connected to a server for storing and processing the gathered data

In a possible alternative, the further physical interface 6 can comprise a port OBD, OBD-II or EOBD.

### Main device for the on-board diagnostics of a vehicle.

The system comprises also the cited main device 14 for the on-board diagnostics of the vehicle V. Particularly, the main device 14 comprises a main driving unit 11 connectable to a communication line 15 or bus, of vehicles V provided with one or more electronic control units C and at least one port OBD for the on-board diagnostics of the vehicle itself. For example, the device 14 can be used on motor-cars, motor-bikes, lorries, public transport vehicles for enabling the on-board diagnostics of the same and, simultaneously, for defining a safety system (provided with two levels - as it will be illustrated in the following) adapted to prevent the control units of the vehicle V from being tampered and ultimately for preventing the same from being stolen.

Particularly, the main device 14 comprises at least one electric switch 12 (Figures 1 and 2) such as a relay, particularly a single contact relay or a multiple contact relay, as a function of the number of physical interfaces to interrupt; the switch is configured for being interposed between the port OBD and the control unit (alternatively, the control units) of a vehicle V: the communication interrupting device 12 is effectively configured for enabling or not the communication between the control units C and port OBD of the vehicle V. Particularly, the communication interrupting device 12 is configured for defining an open condition, wherein it prevents the communication between the port OBD and the vehicle V control unit, and a closed condition wherein it enables the communication between the port OBD and the vehicle control unit. In a preferred embodiment of the invention, the communication interrupting device 12 is configured for normally defining the open condition and for preventing the communication between the port OBD and vehicle V control unit C.

More particularly, the communication interrupting device 12 defines a portion 15a of the communication line 15 upstream the device 12 and a portion 15b of the communication line 15 downstream the device 12 (see Figure 2). In the interruption condition, a communication between the upstream portion 15a and downstream portion 15b of the communication line 15 is prevented. The downstream portion 15b of the communication line is the one connected to the control units C in a known way; viceversa, the upstream portion 15a, responsible for receiving data from the auxiliary device 1, is connected to the connection means 7 which are, in the example, defined by a physical interface and particularly by a standard port OBD.

The communication interrupting device 12 is an element which physically separates the communication buses of the port OBD from the associated vehicle-on-board control units C. Interrupting the communication interfaces can require to interrupt one or more physical signal.

Moreover, the main device 14 comprises the main driving unit 11 (Figures 1 and 2) configured for being installed on the vehicle and connected to the communication interrupting device 12. De facto, the main driving unit 11 is directly connected, on one side, to the communication interrupting device 12, while, on the other side, is configured for being connected to the communication line 15 coming from the port OBD of the vehicle V.

The main driving unit 11 is directly connected to the communication interrupting device 12 (by a wired or possibly a wireless connection) and is configured for commanding this latter to switch to the closed condition - for connecting the unit itself to the control units C of the vehicle - or to the open condition and therefore for preventing the communication between the main driving unit 11 and control units C. In a preferred hereinbefore described embodiment, the communication interrupting device 12 is configured for being normally set in the open condition and therefore for preventing the communication between the main driving unit 11 and control units C.

As it is visible in Figure 2, the main driving unit 11 is configured for detecting at least data passing in the downstream portion 15b of the communication line 15. Generally, the same control unit C is also configured for reading data passing in the upstream portion 15a of the communication line.

In this regard there is a first connecting interface for communicatively connecting the upstream portion 15a of the communication line 15 with the main driving unit 11 and a second connecting interface 9 for communicatively connecting the downstream portion 15b of the communication line 15 of the main driving unit 11. In this way, the main driving unit 11 can independently "watch" the communication passing at the two upstream and downstream portions of the interrupting device 12.

Again, from the structural point of view, the main device 14 further comprises an auxiliary interface 16 connected to the main driving unit 11 and configured for enabling the communication of the main driving unit 11 and a possible alarm system. The auxiliary interface 16 can be both wired or wireless.

It is observed that the main driving unit 11 is the smart element of the system, capable of processing both the signals from the port OBD and from the alarm system (when present) and capable both of actuating the interrupting device 12, and signaling a tamper condition by audible and/or visual alarms. A typical embodiment provides that the main driving unit 11 is a microcontroller and possibly that is present a memory 18 for storing events. The above described system can be indifferently implemented as a single control unit, or integrated in other control units (for example, the function can be integrated in the alarm control unit itself).

The main device 14 can comprise one or more power supplies 17. The power supply is the circuit supplying the supply voltage to all the system blocks, in other words to at least one main driving unit 11, to the first and second connecting interfaces 8, 9, to the interrupting device 12 and to the auxiliary interface 16.

From the operative point of view, the main driving unit 11 is configured for being capable of reading data packets according to the communication protocol for the on-board diagnostics of a vehicle V, arriving via the port OBD of the vehicle V. Particularly, if the main driving unit 11 receives (in the communication line 15 in the upstream portion 15a of the interrupting device 12) reply data packets comprising at least one enabling code, upon receiving the data packet, the same is configured for processing the enabling code contained in said packet for determining the validity. Upon processing the enabling code and therefore verifying the same, the main driving unit 11, if the enabling code is valid, is configured for commanding the communication interrupting device 12 to close. De facto, the enabling code validity enables to close the switch (relay) and therefore enables the driving unit 3 to communicate with the vehicle V control units for gathering and/or transmitting information.

Particularly, the main driving unit 11 is configured for commanding the closed condition of the communication interrupting device 12 only if the main driving unit 11 itself has verified the validity of the enabling code entering at the port ODB, and particularly coming from the removable device 1. The main driving unit 11, if the enabling code is not valid, is configured for not sending any command to the communication interrupting device 12 which is held in the open condition.

Specifically, the main device 14 is configured for communicating with the above described removable device 1 via the port OBD of the vehicle V. De facto, the main device 14 is configured for communicating with the removable device 1 when the physical interface 2 of this latter is inserted in the vehicle V port OBD, and the physical interface 2 sets into the communication the driving unit 3 with the main driving unit 11.

In the connection condition between the devices 1 and 14, the main driving unit 11 is configured for receiving the cited data packet from the driving unit 3 containing the enabling code; the main driving unit 11 is configured, for example and in a known way, for generating a verification code and then for verifying the validity of the enabling code of the data packet based on the verification code generated by the main driving unit 11 itself. De facto, the main driving unit 11 is configured for comparing the verification code with the enabling code received from the removable device 1 for determining the validity of said enabling code. The verification code generatable by the main driving unit 11 is a code varying with a predetermined algorithm according to the variation algorithm of the enabling code.

Such code should be periodically received by the main driving unit 11 for preventing, after a time-out interval has elapsed, the main driving unit itself from opening the circuit which would interrupt the communication from and towards the vehicle control units C.

Besides the above described function, the safety system 100 implements a solution capable of protecting the authentication system from attack or sabotage attempts.

Generally, the antisabotage function of the safety system 100 is based on a very simple principle: if the interrupting device 12 is in the open (or interruption) condition, the main driving unit 11 listens to the messages present on the communication line 15 via the first interface 8; the second interface 9 must not detect any message; on the contrary, it means that the interrupting device 12 has been tampered and therefore this information is communicated to the alarm system.

Instead, when the interrupting device 12 is closed, the processor must verify that there is a simultaneous communication on the first and second portions 15a, 15b of the communication line via the respective interfaces 8, 9.

To this end, the main driving unit 11 is programmed or configured for determining a non authorized access as a function of the condition of the interrupting device and of the presence or not of data passing in the downstream portion 15b of the communication line 15. In other words, the main driving unit 11 determines a non authorized access in the occurrence of the following operative conditions: the communication interrupting device in the interruption condition and detection of a data passage in the downstream portion 15b of the communication line 15.

Therefore, generally the safety system 100 (in a variant thereof) can operate also without listening to the data passing on the portion 15a upstream the interrupting device 12.

De facto, if the activation code for closing the device 12 is directly transmitted to the main driving unit 11 (for example from the driver card), the driving unit itself will not have the necessity to read the data arriving from the port OBD.

Obviously, if it were implemented the described method providing the transmission of the code directly from the auxiliary device 1 via the port OBD, the presence also of a connection with the upstream portion 15a would be necessary for detecting such code.

In this case, the system can implement a series of further controls capable of determining also the type of the performed attack.

In this second case, the main driving unit 11 could be configured for determining a non authorized access as a function of the condition of the interrupting device and of the presence or not of data passing in the downstream portion 15b and in the upstream portion 15a of the communication line 15.

According to the detected situations, the main driving unit 11 can be configured for determining a non authorized access situation without sabotage if the communication interrupting device is in the interruption condition, there is a detection of a data passage in the upstream portion 15a of the communication line 15 and no data passage in the downstream portion 15b of the communication line 15.

The main driving unit 11 can be configured for determining a non authorized access situation implemented by bypassing the interrupting device 12 if the communication interrupting device 12 is in the interruption condition, and there is a detection of a data passage in the upstream portion 15a of the communication line 15 and a detection of data passage in the downstream portion 15b of the communication line 15.

Moreover, the main driving unit 11 can be configured for determining a non authorized access situation directly downstream the interrupting device 12 if the communication interrupting device is in the interruption condition, there is no data passage in the upstream portion 15a of the communication line 15 and a data passage in the downstream portion 15b of the communication line 15 is detected.

Lastly, the main driving unit 11 is configured also for detecting a disconnection condition between the driving unit 11 itself and the upstream and/or downstream portions 15a, 15b of the communication line 15. Indeed, if the first and/or second interfaces 8, 9 are disconnected from the port OBD, the main driving unit 11 will be capable of detecting this condition and signaling it to the alarm system.

In this case, the main driving unit 11 is configured for generating a disconnection signal of the visual and/or audible driving unit.

Lastly, if the overall protection system is disconnected, the alarm control unit is capable of detecting the condition and generating an alarm.

In the following, some use cases for better understanding the operation of the system are specified.

### Authorized access to the port OBD without sabotage

- The interrupting device 12 of the protection system is open and the main driving unit 11 is waiting the authentication;
- the auxiliary unit 1 (an authorized tester OBD) sends a diagnostic command at the port OBD and generates the authentication code;
- the diagnostic message is intercepted by the main driving unit 11 via the first interface 8, while the second interface 9 does not decode any message. The authentication code is processed and, if valid, the interrupting device 12 is closed;
- the safety system signals the alarm system that there is an authorized device at the port OBD.

### Non authorized access to the port OBD without sabotage

- The interruption device 12 of the protection system is open and the main driving unit 11 is waiting the authentication;
- the non authorized auxiliary unit 1 (tester OBD) sends a diagnostic command at the port OBD, but does not generate the authentication code;
- the diagnostic message is intercepted by the main driving unit 11 via the first interface 8, while the second interface 9 does not decode any message;
- the protection system leaves open the interrupting device 12 and signals the alarm system that a non authorized device is present at the port OBD.

### Non authorized access to the port OBD by bypassing the switch

- The contacts of the interrupting device 12 are connected to each other;
- the non authorized auxiliary unit 1 (tester OBD) sends a diagnostic command at the port OBD;
- the diagnostic message is intercepted by the main driving unit 11 via the first interface 8, and also the second interface 9 decodes the message;
- the protection system signals the alarm system that it is present an attack to the protection system at the port OBD.

### Non authorized access to the port OBD when the switch is disconnected

- The contacts of the interrupting device 12 are disconnected and it is established again the connection between the port OBD and the vehicle control unit;
- the non authorized auxiliary unit 1 (tester OBD) sends a diagnostic command at the port OBD;
- the diagnostic message is not intercepted by the protection system because the interfaces 8 and 9 are no more connected to the port OBD. However, the interfaces 8 and 9 are capable of detecting the disconnection of the port OBD (by inverting the rest logic level of the communication signal, for example);
- the protection system signals the alarm system that an attack to the protection system is present at the port OBD.

### Non authorized access to the port OBD downstream the switch

- The non authorized auxiliary unit 1 (tester OBD) is connected downstream the interrupting device 12 and sends a diagnostic command to the port OBD;
- the interrupting device 12 of the protection system is open and waiting the authentication;
- the diagnostic message is intercepted by the protection system via the second interface 9, while the first interface 8 does not detect any message;
- the protection system signals the alarm system that an attack to the protection system is present at the port OBD.

### Non authorized access to the port OBD when the protection system is disconnected

- The protection system is completely disconnected and the connection between the port OBD and the on-board vehicle control units is established again;
- the non authorized auxiliary unit 1 (tester OBD) sends a diagnostic command to the port OBD;
- the protection system is completely out of use;
- the alarm system is capable of detecting the sabotage of the protection system since the communication via the auxiliary interface 16 is absent.

### Diagnostic system

The diagnostic system for vehicles V comprises at least the removable device 1 and main device 14 as hereinbefore described.

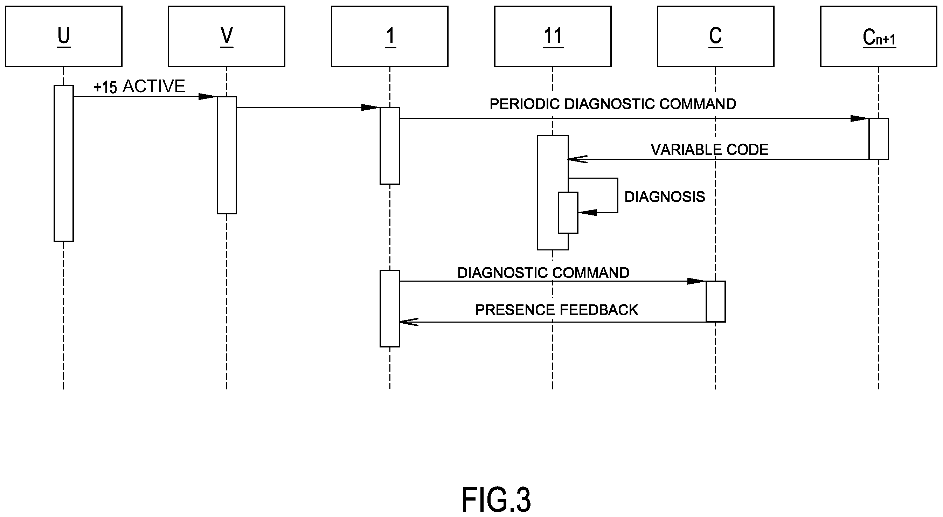

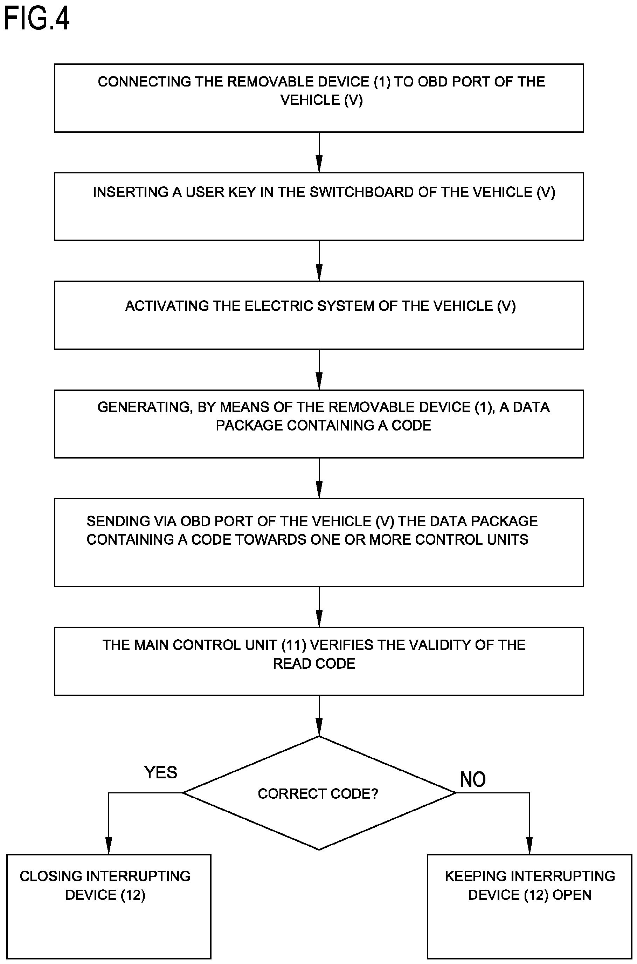

Specifically, the system operates as also outlined in Figures 3 and 4. The user U connects the removable device 1 to the port OBD of the vehicle V comprising the communication interrupting device 12, particularly a single contact/multiple contact relay, configured for closing/opening the circuit towards at least the vehicle V control unit C. Further, the system 100 comprises at least one main driving unit 11 configured for reading the passing data arriving via the vehicle V port OBD, and inserts the key in the control board (or the proximity of the same is detected). The communication interrupting device 12 commanded by the main driving unit 11 is in an interruption condition (the communication line 15 is open).

Inserting the physical interface 2 in the port OBD of the vehicle V enables the communication, via the interface 2, of the driving unit 3 by the main device 14. Upon connecting to each other said devices 1 and 14, the driving unit 3 is configured for generating a data packet according to the communication protocol for the on-board diagnostics, which comprises, as hereinbefore described, at least an enabling code in the reply data packet according to the standard OBD.

Specifically, the removable device 1, upon the connection to the port OBD of the vehicle V via the interface 2, detects the energizing of the electric system of the vehicle V, and the driving unit 3 generates and sends the data packet.

Upon generating said data packet comprising said enabling code, the data packet passes through the physical interface 2 and arrives at the vehicle port OBD. The main driving unit 11 reads the data packet sent by the driving unit 3 and verifies the validity of the enabling code contained therein, if the enabling code is valid, the main driving unit 11 commands the closed condition of the communication interrupting device 12. Then, the same verifies the presence of further enabling codes over time so that the system stays in the active (enabled) communication situation.

Without valid codes, after a predefined time interval from the reception of the last valid code, the communication interrupting device is restored to the interruption condition by disabling any further communication.

Particularly, the main driving unit 11 is configured for verifying the correctness of the received code at least at each enabling code generation by the removable device 1.

Based on the validity or not of the enabling code of the removable device 1, the main driving unit 11 of the main device 14 is configured for commanding the closed or open condition of the communication interrupting device 12.

Generally, the driving unit 3 generates the query data packet and the data packet replying to the query by simulating the presence of a virtual control unit (indicated with Cₙ₊₁ in Figure 3). In this way, the generated reply packet cannot generate communication problems or errors tied to the presence of further control units Cₙ.

### ADVANTAGES OF THE INVENTION

The present invention solves one or more of the problems found in the prior art and attains important advantages. A safety system capable of also determining attack and/or sabotage situations of the main authentication system is provided.

The system enables to manage safe accesses also in systems devised for a non authenticated communication by ensuring the cited additional safety level.

Moreover, the present invention enables to provide a main device 14 and an associated removable device 1 which are particularly flexible and can be installed on any type of machinery, such as a vehicle V.

The structure and configuration of the devices 1 and 14 enable the communication with the control unit of the vehicle V only to authorized persons: the system 100 is extremely safe. Indeed, the object of the invention consisting of providing a removable device 1 and an associated main device 14 which can effectively prevent non authorized persons from gaining access to the vehicle by inhibiting a non authorized reprogramming. Besides enabling only persons authorized by the owner to configure the vehicle V prevents the vehicle from being stolen by reprogramming the control unit. The access to a vehicle V control unit is only enabled to users having the removable device 1. Further, the system can be enabled and disabled independently from the state of the possible alarm control unit present on the vehicle. De facto, both the devices 1 and 14 are configured for operating independently from the state of the possible vehicle alarm system.

## Claims

1. Safety system (100) for controlling the communication between at least one control unit and an auxiliary device (1), the safety system comprising:
- at least one communication line (15) for the data passage;
- at least one control unit (C) in data communication with the communication line (15) and configured for communicating by the communication line,
- a device for interrupting the communication (12) configurable between an interruption condition for interrupting the communication between the auxiliary device (1) and said at least one control unit (C) and an enabling condition for enabling the communication between the auxiliary device (1) and said at least one control unit (C), said communication interrupting device (12) being active on the communication line (15) and defining a portion (15a) of the communication line upstream the device (12) and a portion (15b) of the communication line (15) downstream the device (12), the interruption condition interrupting a communication between the upstream portion (15a) and downstream portion (15b) of the communication line (15), the downstream portion (15b) of the communication line being connected to said at least one control unit (C), the upstream portion (15b) being adapted to receive data from the auxiliary device;
- at least one main driving unit (11) configured for reading data on the communication line (15), said main driving unit (11) being further programmed for configuring the communication interrupting device (12) in the interruption condition and/or the enabling condition;
**characterized by** the fact the main driving unit (11) is configured for detecting at least data passing in the downstream portion (15b) of the communication line (15) and configured for determining a non authorized access as a function of the condition of the interrupting device and the presence or not of data passing in the downstream portion (15b) of the communication line (15).

2. Safety system according to claim 1, wherein the main driving unit (11) is configured for determining a non authorized access in the occurrence of the following operative conditions: the communication interrupting device in the interruption condition and detection of a data passage in the downstream portion (15b) of the communication line (15).

3. Safety system according to anyone of the preceding claims, wherein the main driving unit (11) is further configured for detecting data passing in the upstream portion (15b) of the communication line (15).

4. Safety system according to claim 3, wherein the main driving unit (11) is configured for determining a non authorized access as a function of the condition of the interrupting device and of the presence or not of data passing in the downstream portion (15b) and in the upstream portion (15a) of the communication line (15).

5. Safety system according to anyone of the preceding claims 3 and 4, wherein the main driving unit (11) is configured for detecting a disconnection condition between the driving unit (11) itself and the upstream portion (15a) of the communication line (15), the main driving unit (11) being configured for generating a disconnection signal of the driving unit (11) in the occurrence of the disconnection condition.

6. Safety system according to anyone of the preceding claims from 3 to 5, wherein the main driving unit (11) is configured for determining a non authorized access condition without tamper in the occurrence of the following operative conditions: the communication interrupting device in the interruption condition, detection of a data passage in the upstream portion (15a) of the communication line (15) and detection of the absence of a data passage in the downstream portion (15b) of the communication line (15).

7. Safety system according to anyone of the preceding claims from 3 to 6, wherein the main driving unit (11) is configured for determining a non authorized access condition by bypassing the interrupting device (12) in the occurrence of the following operative conditions: the communication interrupting device in the interruption condition, detection of a data passage in the upstream portion (15a) of the communication line (15) and detection of a data passage in the downstream portion (15b) of the communication line (15).

8. Safety system according to anyone of the preceding claims from 3 to 7, wherein the main driving unit (11) is configured for determining a non authorized access condition downstream the interrupting device (12) in the occurrence of the following operative condition: the communication interrupting device in the interruption condition, absence of a data passage in the upstream portion (15a) of the communication line (15) and detection of a data passage in the downstream portion (15b) of the communication line (15).

9. Safety system according to anyone of the preceding claims from 3 to 8, wherein the main driving unit (11) is configured for detecting a disconnection condition between the driving unit (11) itself and the upstream portion (15a) of the communication line (15), the main driving unit (11) being configured for generating a signal disconnecting the driving unit (11) in the occurrence of the disconnection condition.

10. Safety system according to anyone of the preceding claims, wherein the main driving unit (11) is configured for detecting a disconnection condition between the driving unit (11) itself and the downstream portion (15b) of the communication line, the main driving unit (11) being configured for generating a disconnection signal of the driving unit (11) in the occurrence of the disconnection condition.

11. Safety system according to anyone of the preceding claims, comprising a first connection interface (8) for communicating the upstream portion (15a) of the communication line (15) with the main driving unit (11) and/or a second connection interface (9) for communicating the downstream portion (15b) of the communication line (15) with the main driving unit (11).

12. Safety system according to anyone of the preceding claims, comprising an auxiliary interface (16) connected to the main driving unit (11) and configured for enabling the communication of the main driving unit (11) with an alarm system.

13. Safety system according to anyone of the preceding claims, comprising connection means (7) associated to the communication line (15) for enabling a data communication at least with the auxiliary device (1), particularly said connection means (7) comprising a physical interface, such as a port OBD.

14. Safety system according to anyone of the preceding claims, wherein the main device (14) comprises the communication line (15), the control unit (C), the communication interrupting device (12) and the main driving unit (11), said control unit (C) being configured for communicating by the communication line according to a prefixed communication protocol, for receiving one or more query data packets according to the communication protocol and for replying, if queried, with a reply data packet according to the communication protocol, the safety system further comprising an auxiliary device (1) having:
- at least one driving unit (3) configured for generating a query data packet according to the prefixed communication protocol, said data packet being destined to be sent to the communication line (15) of the main device (14) for querying at least the control unit present in the main device;
- connection means (2) for enabling a data communication at least with the main device (14),
the driving unit (3) of the auxiliary device being configured for generating, according to the prefixed communication protocol and at least once, a data packet replying to said query data packet, said reply data packet generated by the driving unit (3) simulating a reply of a central unit to said query data packet and containing an enabling code, the main driving unit (11) being configured for reading at least the reply data packets passing on the communication line (15) and configured for switching the communication interrupting device (12) to the enabling condition as a function of the enabling code.

15. System according to the preceding claim, wherein the prefixed communication protocol is a protocol OBD and wherein the query data packets comprise standard queries PID.

16. System according to anyone of the preceding claims 14 and 15, wherein the driving unit (3) of the auxiliary device (1) is configured for generating, a plurality of temporarily spaced times for predetermined time intervals and according to the prefixed communication protocol, a query data packet and a corresponding data packet replying to said query data packet, each reply data packet generated by the driving unit (3) simulating a reply of a control unit to the corresponding query data packet and each containing a further enabling code, the main driving unit (11) being configured for switching the communication interrupting device (12) to the interruption condition in the absence of a detection of the further enabling codes transmitted at the predetermined time intervals.

17. System according to anyone of the preceding claims from 14 to 16, wherein the auxiliary device (1) is a movable device for the vehicle-on-board diagnostics, the communication protocol being a protocol for the vehicle-on-board diagnostics.

18. System according to anyone of the preceding claims, wherein said control unit (C) comprises a control unit of a movable vehicle (V).

## Patentansprüche

1. Sicherheitssystem (100) zur Steuerung der Kommunikation zwischen mindestens einer Steuereinheit und einer Hilfsvorrichtung (1), wobei das Sicherheitssystem Folgendes umfasst:
- mindestens eine Kommunikationsleitung (15) für die Datenübertragung;
- mindestens eine Steuereinheit (C) in Datenkommunikation mit der Kommunikationsleitung (15) und die dafür konfiguriert ist, über die Kommunikationsleitung zu kommunizieren,
- eine Vorrichtung zur Unterbrechung der Kommunikation (12), die zwischen einem Unterbrechungszustand zum Unterbrechen der Kommunikation zwischen der Hilfsvorrichtung (1) und der mindestens einen Steuereinheit (C) und einem Aktivierungszustand zum Ermöglichen der Kommunikation zwischen der Hilfsvorrichtung (1) und der mindestens einen Steuereinheit (C) konfigurierbar ist, wobei die Kommunikationsunterbrechungsvorrichtung (12) auf der Kommunikationsleitung (15) aktiv ist und einen Abschnitt (15a) der Kommunikationsleitung stromaufwärts der Vorrichtung (12) und einen Abschnitt (15b) der Kommunikationsleitung (15) stromabwärts der Vorrichtung (12) definiert, wobei der Unterbrechungszustand eine Kommunikation zwischen dem stromaufwärtigen Abschnitt (15a) und dem stromabwärtigen Abschnitt (15b) der Kommunikationsleitung (15) unterbricht, wobei der stromabwärtige Abschnitt (15b) der Kommunikationsleitung mit der mindestens einen Steuereinheit (C) verbunden ist, wobei der stromaufwärtige Abschnitt (15b) dafür ausgelegt ist, Daten von der Hilfsvorrichtung zu empfangen;
- mindestens eine Haupttreibereinheit (11), die zum Lesen von Daten auf der Kommunikationsleitung (15) konfiguriert ist, wobei die Haupttreibereinheit (11) ferner dafür programmiert ist, die Kommunikationsunterbrechungsvorrichtung (12) in dem Unterbrechungszustand und/oder dem Aktivierungszustand zu konfigurieren;
**dadurch gekennzeichnet, dass** die Haupttreibereinheit (11) dafür konfiguriert ist, mindestens Daten zu erfassen, die in dem stromabwärtigen Abschnitt (15b) der Kommunikationsleitung (15) übertragen werden, und zum Bestimmen eines nicht autorisierten Zugriffs als eine Funktion des Zustands der Unterbrechungsvorrichtung und des Vorhandenseins oder Nichtvorhandenseins von Daten, die in dem stromabwärtigen Abschnitt (15b) der Kommunikationsleitung (15) übertragen werden, konfiguriert ist.

2. Sicherheitssystem nach Anspruch 1, wobei die Haupttreibereinheit (11) zum Bestimmen eines nicht autorisierten Zugriffs beim Auftreten der folgenden Betriebszustände konfiguriert ist: die Kommunikationsunterbrechungsvorrichtung im Unterbrechungszustand und Erfassung einer Datenübertragung in dem stromabwärtigen Abschnitt (15b) der Kommunikationsleitung (15).

3. Sicherheitssystem nach einem der vorhergehenden Ansprüche, wobei die Haupttreibereinheit (11) ferner zum Erfassen von Daten konfiguriert ist, die in dem stromaufwärtigen Abschnitt (15b) der Kommunikationsleitung (15) übertragen werden.

4. Sicherheitssystem nach Anspruch 3, wobei die Haupttreibereinheit (11) dafür konfiguriert ist, einen nicht autorisierten Zugriff als Funktion von Folgendem zu bestimmen: dem Zustand der Unterbrechungsvorrichtung und dem Vorhandensein oder Nichtvorhandensein von Daten, die in dem stromabwärtigen Abschnitt (15b) und in dem stromaufwärtigen Abschnitt (15a) der Kommunikationsleitung (15) übertragen werden.

5. Sicherheitssystem nach einem der vorhergehenden Ansprüche 3 und 4, wobei die Haupttreibereinheit (11) zum Erfassen eines Trennzustands zwischen der Treibereinheit (11) selbst und dem stromaufwärtigen Abschnitt (15a) der Kommunikationsleitung (15) konfiguriert ist, wobei die Haupttreibereinheit (11) zum Erzeugen eines Trennsignals der Treibereinheit (11) beim Auftreten des Trennzustands konfiguriert ist.

6. Sicherheitssystem nach einem der vorhergehenden Ansprüche 3 bis 5, wobei die Haupttreibereinheit (11) zum Bestimmen eines nicht autorisierten Zugriffszustands ohne Manipulation beim Auftreten der folgenden Betriebszustände konfiguriert ist: die Kommunikationsunterbrechungsvorrichtung befindet sich im Unterbrechungszustand, Erfassung einer Datenübertragung in dem stromaufwärtigen Abschnitt (15a) der Kommunikationsleitung (15) und Erfassung der Abwesenheit einer Datenübertragung in dem stromabwärtigen Abschnitt (15b) der Kommunikationsleitung (15).

7. Sicherheitssystem nach einem der vorhergehenden Ansprüche 3 bis 6, wobei die Haupttreibereinheit (11) zum Bestimmen eines nicht autorisierten Zugriffszustands durch Umgehen der Unterbrechungsvorrichtung (12) beim Auftreten der folgenden Betriebszustände konfiguriert ist: die Kommunikationsunterbrechungsvorrichtung befindet sich im Unterbrechungszustand, Erfassung einer Datenübertragung in dem stromaufwärtigen Abschnitt (15a) der Kommunikationsleitung (15) und Erfassung einer Datenübertragung im stromabwärtigen Abschnitt (15b) der Kommunikationsleitung (15).

8. Sicherheitssystem nach einem der vorhergehenden Ansprüche 3 bis 7, wobei die Haupttreibereinheit (11) zum Bestimmen eines nicht autorisierten Zugriffszustands stromabwärts der Unterbrechungsvorrichtung (12) beim Auftreten des folgenden Betriebszustands konfiguriert ist: die Kommunikationsunterbrechungsvorrichtung befindet sich im Unterbrechungszustand, Abwesenheit einer Datenübertragung in dem stromaufwärtigen Abschnitt (15a) der Kommunikationsleitung (15) und Erfassung einer Datenübertragung im stromabwärtigen Abschnitt (15b) der Kommunikationsleitung (15).

9. Sicherheitssystem nach einem der vorhergehenden Ansprüche 3 bis 8, wobei die Haupttreibereinheit (11) zum Erfassen eines Trennzustands zwischen der Treibereinheit (11) selbst und dem stromaufwärtigen Abschnitt (15a) der Kommunikationsleitung (15) konfiguriert ist, wobei die Haupttreibereinheit (11) zum Erzeugen eines Signals zum Trennen der Treibereinheit (11) beim Auftreten des Trennzustands konfiguriert ist.

10. Sicherheitssystem nach einem der vorhergehenden Ansprüche, wobei die Haupttreibereinheit (11) zum Erfassen eines Trennzustands zwischen der Treibereinheit (11) selbst und dem stromabwärtigen Abschnitt (15b) der Kommunikationsleitung konfiguriert ist, wobei die Haupttreibereinheit (11) zum Erzeugen eines Trennsignals der Treibereinheit (11) beim Auftreten des Trennzustands konfiguriert ist.

11. Sicherheitssystem nach einem der vorhergehenden Ansprüche, das Folgendes umfasst: eine erste Verbindungsschnittstelle (8) zum Kommunizieren des stromaufwärtigen Abschnitts (15a) der Kommunikationsleitung (15) mit der Haupttreibereinheit (11) und/oder eine zweite Verbindungsschnittstelle (9) zum Kommunizieren des stromabwärtigen Abschnitts (15b) der Kommunikationsleitung (15) mit der Haupttreibereinheit (11).

12. Sicherheitssystem nach einem der vorhergehenden Ansprüche, das eine Hilfsschnittstelle (16) umfasst, die mit der Haupttreibereinheit (11) verbunden ist, und die zum Herstellen der Kommunikation der Haupttreibereinheit (11) mit einem Alarmsystem konfiguriert ist.

13. Sicherheitssystem nach einem der vorhergehenden Ansprüche, das ein Verbindungsmittel (7) umfasst, das der Kommunikationsleitung (15) zugeordnet ist, um eine Datenkommunikation mindestens mit der Hilfsvorrichtung (1) zu ermöglichen, wobei insbesondere die Verbindungsvorrichtung (7) eine physikalische Schnittstelle, wie eine Port-OBD, umfasst.

14. Sicherheitssystem nach einem der vorhergehenden Ansprüche, wobei die Hauptvorrichtung (14) die Kommunikationsleitung (15), die Steuereinheit (C), die Kommunikationsunterbrechungsvorrichtung (12) und die Haupttreibereinheit (11) umfasst, wobei die Steuereinheit (C) für Folgendes konfiguriert ist: Kommunizieren durch die Kommunikationsleitung gemäß einem vorangestellten Kommunikationsprotokoll, Empfangen eines oder mehrerer Abfragedatenpakete gemäß dem Kommunikationsprotokoll und Antworten, falls abgefragt, mit einem Antwortdatenpaket gemäß dem Kommunikationsprotokoll, wobei das Sicherheitssystem ferner eine Hilfsvorrichtung (1) umfasst, die Folgendes aufweist:
- mindestens eine Treibereinheit (3), die zum Erzeugen eines Anfragedatenpakets gemäß dem vorangestellten Kommunikationsprotokoll konfiguriert ist, wobei das Datenpaket dazu bestimmt ist, zu der Kommunikationsleitung (15) der Hauptvorrichtung (14) gesendet zu werden, um mindestens die Steuereinheit abzufragen, die in der Hauptvorrichtung vorhanden ist;
- ein Verbindungsmittel (2) zum Ermöglichen einer Datenkommunikation mindestens mit der Hauptvorrichtung (14),
wobei die Treibereinheit (3) der Hilfsvorrichtung dafür konfiguriert ist, gemäß dem vorangestellten Kommunikationsprotokoll und mindestens einmal ein Datenpaket zu erzeugen, das auf das Anfragedatenpaket antwortet, wobei das Antwortdatenpaket von der Treibereinheit (3) erzeugt wird, die eine Antwort einer Zentraleinheit auf das Anfragedatenpaket simuliert und einen Aktivierungscode umfasst, wobei die Haupttreibereinheit (11) zum Lesen von mindestens den Antwortdatenpaketen konfiguriert ist, die auf der Kommunikationsleitung (15) übertragen werden, und zum Umschalten der Kommunikationsunterbrechungsvorrichtung (12) in den Aktivierungscode als Funktion des Aktivierungszustands konfiguriert ist.

15. System nach dem vorhergehenden Anspruch, wobei das vorangestellte Kommunikationsprotokoll ein Protokoll-OBD ist und wobei die Abfragedatenpakete Standardabfragen-PID umfassen.

16. System nach einem der vorhergehenden Ansprüche 14 und 15, wobei die Treibereinheit (3) der Hilfsvorrichtung (1) für eine Vielzahl von zeitweilig beabstandeten Zeiten für vorbestimmte Zeitintervalle und gemäß dem vorangestellten Kommunikationsprotokoll für Folgendes konfiguriert ist: Erzeugen eines Abfragedatenpakets und eines entsprechenden Datenpakets, das auf das Abfragedatenpaket antwortet, wobei jedes Antwortdatenpaket, das von der Treibereinheit (3) erzeugt wird, eine Antwort einer Steuereinheit auf das entsprechende Anfragedatenpaket simuliert, und jedes einen weiteren Aktivierungscode umfasst, wobei die Haupttreibereinheit (11) zum Umschalten der Kommunikationsunterbrechungsvorrichtung (12) in den Unterbrechungszustand in Abwesenheit einer Erfassung der weiteren Aktivierungscodes, die zu den vorbestimmten Zeitintervallen übertragen werden, konfiguriert ist.

17. System nach einem der vorhergehenden Ansprüche 14 bis 16, wobei die Hilfsvorrichtung (1) eine bewegliche Vorrichtung für die On-Board-Fahrzeugdiagnose ist, wobei das Kommunikationsprotokoll ein Protokoll für die On-Board-Fahrzeugdiagnose ist.

18. System nach einem der vorhergehenden Ansprüche, wobei die Steuereinheit (C) eine Steuereinheit eines beweglichen Fahrzeugs (V) umfasst.

## Revendications

1. Système de sécurité (100) destiné à commander la communication entre au moins une unité de commande et un dispositif auxiliaire (1), le système de sécurité comprenant :
- au moins une ligne de communication (15) pour le passage de données ;
- au moins une unité de commande (C) en communication de données avec la ligne de communication (15) et configurée pour communiquer par la ligne de communication,
- un dispositif pour interrompre la communication (12) configurable entre un état d'interruption pour interrompre la communication entre le dispositif auxiliaire (1) et ladite au moins une unité de commande (C) et un état d'activation pour activer la communication entre le dispositif auxiliaire (1) et ladite au moins une unité de commande (C), ledit dispositif d'interruption de communication (12) étant actif sur la ligne de communication (15) et définissant une partie (15a) de la ligne de communication en amont du dispositif (12) et une partie (15b) de la ligne de communication (15) en aval du dispositif (12), l'état d'interruption interrompant une communication entre la partie amont (15a) et la partie aval (15b) de la ligne de communication (15), la partie aval (15b) de la ligne de communication étant connectée à ladite au moins une unité de commande (C), la partie amont (15b) étant adaptée pour recevoir des données depuis le dispositif auxiliaire ;
- au moins une unité d'entraînement principale (11) configurée pour lire des données sur la ligne de communication (15), ladite unité d'entraînement principale (11) étant programmée en outre pour configurer le dispositif d'interruption de communication (12) dans l'état d'interruption et/ou l'état d'activation ;
**caractérisé par le fait que** l'unité d'entraînement principale (11) est configurée pour détecter au moins un passage de données dans la partie aval (15b) de la ligne de communication (15) et configurée pour déterminer un accès non autorisé en fonction de l'état du dispositif d'interruption et de la présence ou non d'un passage de données dans la partie aval (15b) de la ligne de communication (15).

2. Système de sécurité selon la revendication 1, dans lequel l'unité d'entraînement principale (11) est configurée pour déterminer un accès non autorisé en cas d'occurrence des états opérationnels suivants : dispositif d'interruption de communication dans l'état d'interruption et détection d'un passage de données dans la partie aval (15b) de la ligne de communication (15).

3. Système de sécurité selon l'une quelconque des revendications précédentes, dans lequel l'unité d'entraînement principale (11) est configurée en outre pour détecter un passage de données dans la partie amont (15b) de la ligne de communication (15).

4. Système de sécurité selon la revendication 3, dans lequel l'unité d'entraînement principale (11) est configurée pour déterminer un accès non autorisé en fonction de l'état du dispositif d'interruption et de la présence ou non d'un passage de données dans la partie aval (15b) et dans la partie amont (15a) de la ligne de communication (15).

5. Système de sécurité selon l'une quelconque des revendications précédentes 3 et 4, dans lequel l'unité d'entraînement principale (11) est configurée pour détecter un état de déconnexion entre l'unité d'entraînement (11) proprement dite et la partie amont (15a) de la ligne de communication (15), l'unité d'entraînement principale (11) étant configurée pour générer un signal de déconnexion de l'unité d'entraînement (11) en cas d'occurrence de l'état de déconnexion.

6. Système de sécurité selon l'une quelconque des revendications précédentes 3 à 5, dans lequel l'unité d'entraînement principale (11) est configurée pour déterminer un état d'accès non autorisé sans manipulation frauduleuse en cas d'occurrence des états opérationnels suivants : dispositif d'interruption de communication dans l'état d'interruption, détection d'un passage de données dans la partie amont (15a) de la ligne de communication (15) et détection de l'absence d'un passage de données dans la partie aval (15b) de la ligne de communication (15).

7. Système de sécurité selon l'une quelconque des revendications précédentes 3 à 6, dans lequel l'unité d'entraînement principale (11) est configurée pour déterminer un état d'accès non autorisé en contournant le dispositif d'interruption (12) en cas d'occurrence des états opérationnels suivants : dispositif d'interruption de communication dans l'état d'interruption, détection d'un passage de données dans la partie amont (15a) de la ligne de communication (15) et détection d'un passage de données dans la partie aval (15b) de la ligne de communication (15).

8. Système de sécurité selon l'une quelconque des revendications précédentes 3 à 7, dans lequel l'unité d'entraînement principale (11) est configurée pour déterminer un état d'accès non autorisé en aval du dispositif d'interruption (12) en cas d'occurrence de l'état opérationnel suivant : dispositif d'interruption de communication dans l'état d'interruption, absence d'un passage de données dans la partie amont (15a) de la ligne de communication (15) et détection d'un passage de données dans la partie aval (15b) de la ligne de communication (15).

9. Système de sécurité selon l'une quelconque des revendications précédentes 3 à 8, dans lequel l'unité d'entraînement principale (11) est configurée pour détecter un état de déconnexion entre l'unité d'entraînement (11) proprement dite et la partie amont (15a) de la ligne de communication (15), l'unité d'entraînement principale (11) étant configurée pour générer un signal qui déconnecte l'unité d'entraînement (11) en cas d'occurrence de l'état de déconnexion.

10. Système de sécurité selon l'une quelconque des revendications précédentes, dans lequel l'unité d'entraînement principale (11) est configurée pour détecter un état de déconnexion entre l'unité d'entraînement (11) proprement dite et la partie aval (15b) de la ligne de communication, l'unité d'entraînement principale (11) étant configurée pour générer un signal de déconnexion de l'unité d'entraînement (11) en cas d'occurrence de l'état de déconnexion.

11. Système de sécurité selon l'une quelconque des revendications précédentes, comprenant une première interface de connexion (8) pour mettre en communication la partie amont (15a) de la ligne de communication (15) avec l'unité d'entraînement principale (11) et/ou une seconde interface de connexion (9) pour mettre en communication la partie aval (15b) de la ligne de communication (15) avec l'unité d'entraînement principale (11).

12. Système de sécurité selon l'une quelconque des revendications précédentes, comprenant une interface auxiliaire (16) connectée à l'unité d'entraînement principale (11) et configurée pour permettre la communication de l'unité d'entraînement principale (11) avec un système d'alarme.

13. Système de sécurité selon l'une quelconque des revendications précédentes, comprenant un moyen de connexion (7) associé à la ligne de communication (15) pour permettre une communication de données au moins avec le dispositif auxiliaire (1), particulièrement ledit moyen de connexion (7) comprenant une interface physique, tel qu'un port OBD.

14. Système de sécurité selon l'une quelconque des revendications précédentes, dans lequel le dispositif principal (14) comprend la ligne de communication (15), l'unité de commande (C), le dispositif d'interruption de communication (12) et l'unité d'entraînement principale (11), ladite unité de commande (C) étant configurée pour communiquer par la ligne de communication selon un protocole de communication préétabli, pour recevoir un ou plusieurs paquets de données d'interrogation conformément au protocole de communication et pour répondre, si elle est interrogée, avec un paquet de données de réponse conformément au protocole de communication, le système de sécurité comprenant en outre un dispositif auxiliaire (1) comportant :
- au moins une unité d'entraînement (3) configurée pour générer un paquet de données d'interrogation conformément au protocole de communication préétabli, ledit paquet de données étant destiné à être envoyé à la ligne de communication (15) du dispositif principal (14) pour interroger au moins l'unité de commande présente dans le dispositif principal ;
- un moyen de connexion (2) pour permettre une communication de données au moins avec le dispositif principal (14),
l'unité d'entraînement (3) du dispositif auxiliaire étant configurée pour générer, conformément au protocole de communication préétabli et au moins une fois, un paquet de données répondant audit paquet de données d'interrogation, ledit paquet de données de réponse généré par l'unité d'entraînement (3) simulant une réponse d'une unité centrale audit paquet de données d'interrogation et contenant un code d'activation, l'unité d'entraînement principale (11) étant configurée pour lire au moins les paquets de données de réponse qui passent sur la ligne de communication (15) et configurée pour commuter le dispositif d'interruption de communication (12) sur l'état d'activation en fonction du code d'activation.

15. Système selon la revendication précédente, dans lequel le protocole de communication préétabli est un protocole de diagnostic embarqué OBD et dans lequel les paquets de données d'interrogation comprennent des interrogations standard PID.

16. Système selon l'une quelconque des revendications précédentes 14 et 15, dans lequel l'unité d'entraînement (3) du dispositif auxiliaire (1) est configurée pour générer, une pluralité de fois espacées temporellement pendant des intervalles de temps prédéterminés et conformément au protocole de communication préétabli, un paquet de données d'interrogation et un paquet de données correspondant répondant audit paquet de données d'interrogation, chaque paquet de données de réponse généré par l'unité d'entraînement (3) simulant une réponse d'une unité de commande au paquet de données d'interrogation correspondant et contenant chacun un autre code d'activation, l'unité d'entraînement principale (11) étant configurée pour commuter le dispositif d'interruption de communication (12) sur l'état d'interruption en l'absence de détection des autres codes d'activation transmis aux intervalles de temps prédéterminés.

17. Système selon l'une quelconque des revendications précédentes 14 à 16, dans lequel le dispositif auxiliaire (1) est un dispositif mobile de diagnostic à bord d'un véhicule, le protocole de communication étant un protocole de diagnostic à bord d'un véhicule.

18. Système selon l'une quelconque des revendications précédentes, dans lequel ladite unité de commande (C) comprend une unité de commande d'un véhicule mobile (V).
